# EUROPÄISCHE PATENTSCHRIFT

(11) **EP 3 168 253 B1**
(45) Veröffentlichungstag und Bekanntmachung des Hinweises auf die Patenterteilung: **11.04.2018**
(21) Anmeldenummer: 15194576.3
(22) Anmeldetag: 13.11.2015
(51) Int. Cl.: C08G 67/00, C08K 3/00, C08K 5/13, C08G 67/02, C08L 73/00

(54) **FLAMMGESCHÜTZTE, ALIPHATISCHE POLYKETONMASSEN, HIERAUS HERGESTELLTE FORMKÖRPER SOWIE VERFAHREN ZU DEREN HERSTELLUNG**
FLAME RETARDANT ALIPHATIC POLYKETONE MASSES, MOULDS OBTAINED FROM THESE AND METHOD FOR PREPARING THE SAME
MASSES DE POLYCETONE ALIPHATIQUES, IGNIFUGES, CORPS DE FORMAGE FABRIQUE A PARTIR DESDITES MASSES ET LEUR PROCEDE DE FABRICATION

(43) Veröffentlichungstag der Anmeldung: 17.05.2017
(73) Patentinhaber: EMS-PATENT AG, 7013 Domat / Ems (CH)
(72) Erfinder: Stöppelmann, Georg, 7402 Bonaduz (CH)
(74) Vertreter: Pfenning, Meinig & Partner mbB

(56) Entgegenhaltungen:
- EP-A1- 0 489 517
- EP-A2- 0 289 077
- EP-A2- 0 714 938
- WO-A1-00/12608
- WO-A1-93/01239
- GB-A- 2 322 861
- GB-A- 2 348 427
- US-A- 4 960 807
- US-A- 5 028 652
- US-A- 5 633 301

## Beschreibung

Die vorliegende Erfindung betrifft Polyketonformmassen auf Basis von teilkristallinen, aliphatischen Polyketonen. Insbesondere betrifft sie halogenfreie, flammgeschützte Formmassen auf Basis aliphatischer Polyketone, die bevorzugtermaßen Salze von Phosphinsäuren als Flammschutzmittel enthalten. Die Formmassen erfüllen die Brandschutzklassifikation V0 nach UL94 und zeigen gute mechanische Eigenschaften. Diese Formmassen eignen sich zur Herstellung von insbesondere dünnwandigen Formkörpern für die Elektro- und Elektronik-Industrie wie beispielsweise Gehäusen, Gehäusekomponenten oder Konnektoren.

### STAND DER TECHNIK

Aliphatische Polyketone sind seit vielen Jahren bekannt und zeichnen sich durch nahezu konstante mechanische Eigenschaften zwischen 10 und 100°C, einer sehr guten Hydrolysebeständigkeit, einer hohen Wärmeformbeständigkeit, einer guten Verschleissfestigkeit und einer guten Barriere gegen Kraftstoffe aus.

Andererseits weisen aliphatische Polyketone, obwohl sie thermoplastische Kunststoffe mit durchwegs guten Eigenschaften darstellen, den Nachteil auf, dass sie relativ hohe Schmelzpunkte besitzen, die nahe den Temperaturen liegen, bei denen sie chemischem Abbau, insbesondere inter- und intramolekularen Aldolkondensationsreaktionen, unterliegen. Dies ist problematisch, da die Polyketonformmassen zum einen unter Verwendung üblicher Verarbeitungstechnologien in der Schmelze schwierig zu verarbeiten sind und zum anderen die Eigenschaften derartiger Formmassen durch die bei der Verarbeitung induzierten Abbau- und Vernetzungsreaktionen in Mitleidenschaft gezogen werden können.

Um diese Probleme zu überwinden, werden in der Literatur verschiedene mögliche Lösungen vorgeschlagen. Beispielsweise beschreibt EP213671 und EP257663 aliphatische Polyketone auf Basis von Kohlenmonoxid, Ethen und mindestens einem weiteren olefinisch ungesättigten Monomeren, die geringere Schmelzpunkte aufweisen als entsprechende Polyketon-Copolymere ausschliesslich gebildet aus Kohlenmonoxid und Ethen. Die beispielhaft gezeigten Terpolymere können bei 20 - 30°C tieferen Temperaturen verarbeitet werden, bei denen der thermische Abbau und die Vernetzung langsamer abläuft. Damit besitzen diese Terpolymere ein grösseres Verarbeitungsfenster. Das gleiche Ziel verfolgt DE2626272 mit einer polymeranalogen Umsetzung der Polyketone mit primären Monoaminen, Mono- oder Dithiolen, wobei der Schmelzpunkt des ursprünglichen Polyketons um bis zu 80°C gesenkt werden kann.

Dieser Lösungsansatz mildert das Problem in gewissem Maße, löst aber nicht alle Probleme bei der Verarbeitung von Polyketonen in der Schmelze. So werden zur weiteren Verbesserung der Polyketonformmassen Zusammensetzungen beschrieben, die auf dem Zusatz anderer Polymere, wie z.B. Polyamid oder Polyolefin, dem Zusatz von Weichmachern oder der Verwendung spezieller Additive beruhen. Die Verwendung von weiteren Polymeren hat allerdings den Nachteil, dass relative grosse Mengen davon erforderlich sind und somit insbesondere die thermischen und mechanischen Eigenschaften insgesamt verschlechtert werden. Abhängig vom zugesetzten Polymer können zudem unerwünschte Reaktionen mit dem Polyketon eintreten, infolgedessen die Eigenschaften der gebildeten Formmassen auf tiefem Niveau liegen. Weichmacher stellen andererseits nur dann einen gangbaren Lösungsansatz dar, falls flexible Formmassen gefragt sind.

Der Zusatz von Aluminiumsauerstoffverbindungen wird in EP310166 und EP326224 beschrieben. So soll z.B. Aluminiumhydroxid für eine Verbesserung des Fliessverhaltens von Polyketonen sorgen, weil die Vernetzung bei der Verarbeitungstemperatur durch das Additiv verzögert eintritt und über die Verarbeitungsdauer auch langsamer abläuft.

Gemäß EP629663 oder EP896021 lässt sich die Schmelzverarbeitung von Polyketonen durch den Zusatz von 0.01 bis 10 % Pseudoböhmit weiter verbessern. Dabei verhindert Pseudoböhmit das allzu schnelle Ansteigen der Schmelzviskosität bei Verarbeitungstemperaturen von 20 K oberhalb der Schmelztemperatur der Polyketone.

Gemäß JP11-181080 können zwar Zusätze wie Aluminium- oder Magnesiumoxid das Fliessverhalten während der Verarbeitung verbessern, aber nicht die Generierung von flüchtigen Verbindungen durch Abbau der Polyketone verhindern. Zur Reduktion oder Verhinderung der Ausgasungen wird die Behandlung der Polyketone mit Ammoniak oder primären Aminen vorgeschlagen.

DE19808938 betrifft u.a. die Stabilisierung von Polycarbonat, Polyester und Polyketon gegen oxidativen, thermischen und lichtinduzierten Abbau, wobei dem Polymer neben einer Benzofuran-2-on-Verbindung zusätzliche Stabilisatoren zugesetzt werden können, u.a. Phosphite und Phosphinate.

Soll neben der Fliessfähigkeit auch noch die Farbe und die Kristallinität der Polyketonformmassen über die Verarbeitung hinweg gewahrt bleiben, empfiehlt EP896021 den Zusatz einer Kombination aus Aluminiumhydroxid und Polyol.

EP322959 beschreibt faserverstärkte Polyketonformmassen, insbesondere mit Glasfaser verstärkte Formmassen sowie ein Verfahren dieser Formmasse aus einer Polyketonlösung. Ziel ist es die Festigkeit und den Modul der Formmassen zu erhöhen.

US2007/0299171A1 beschreibt eine Flammschutzkombination für Thermoplaste enthaltend mindestens 3 Komponenten, nämlich ein Phosphinat, ein Reaktionsprodukt aus Phosphorsäure und Melamin sowie ein Melaminkondensationsprodukt, insbesondere Melem. Gearbeitet wird ausschliesslich Polyamid PA66 als Thermoplast, wobei die Formmasse neben 30 Gew.-% Glasfasern zwischen 20 und 23 Gew.-% der Flammschutzkombination enthält. Polyketone, ohne nähere Beschreibung der Art, werden nur in einer langen Liste als ein möglicher Thermoplast genannt.

Flammgeschützte, glasfaserverstärkte Polyketonformmassen auf Basis aliphatischer Polyketone werden in WO97/14743 offenbart. Das Flammschutzmittel Magnesiumhydroxid ist bevorzugt in einer Konzentration von 25-40 Gew.-% in der Formmasse enthalten. Die Formmassen mit 25 Gew.-% Magnesiumhydroxid und 15 Gew.-% Glasfasern erzielen bei einer Probendicke von 1,6 mm die Brandschutzklassifizierung V0, wenn kein zinkhaltiger Synergist in der Formmasse enthalten ist.

Die WO 00/12608 beschreibt eine Flammschutzzusammensetzung, die ein Polyketonpolymer sowie zumindest eine Stickstoff enthaltende Komponente sowie ggf. Phosphor enthaltende Flammschutzmittel beinhaltet.

Die GB 2 322 861 A beschreibt stabilisierende Polycarbonate, Polyester und Polyketone, die zumindest eine Komponente von Benzofuran-2-one-Typ beinhalten.

Die US 4,960,807 betrifft lineare alternierende Polymere von Kohlenmonoxid und zumindest einem ethylenisch ungesättigten Kohlenwasserstoff sowie hierin eingearbeitet gewisse Anteile von Zinkoxid, Zinksulfid sowie einem Triakylphosphit.

Aus der EP 0 714 938 A2 sind thermisch stabilisierte Polyketonpolymere bekannt, die geringe Mengen eines primären Antioxidanz, einem sekundären Antioxidanz sowie einem Radikalfänger beinhalten.

Die US 5,633,301 betrifft eine flammgeschützte Polyketonpolymerzusammensetzung, die unter anderem ein bizyklisches Phosphor enthaltendes Flammschutzmittel, ein anschwellendes Flammschutzmittel, enthaltend Stickstoff und Phosphor wie beispielsweise Melaminphosphat sowie gegebenenfalls einen Monophosphat-Ester umfasst.

Die EP 0 289 077 betrifft eine thermostabilisierte Copolymerzusammensetzung, umfassend ein alternierendes Copolymer auf Basis von Kohlenmonoxid sowie eine olefinisch ungesättigte Komponente und, basierend auf dem Gewichtsanteil des Copolymeren von 0,03 bis 5,0 Gew.-% ein Additiv ausgewählt aus phenolischen Dicarboxylaten und phenolischen Dicarboxamiden, ggf. zusammen mit phenolischen Phosphiten.

Die WO 93/01239 betrifft stabilisierte Polyketonzusammensetzungen, die auf einem Großteil von Polymeren auf Basis von Kohlenmonoxid und zumindest einem Olefin und einem geringeren Anteil an Stabilisator basieren. Der Stabilisator kann ein Gemisch aus Aluminium-Trialkoxiden oder Hydrolyseprodukten hiervon mit einem Amin darstellen.

Aus der GB 2 348 427 A sind stabilisierte Polyketonzusammensetzungen bekannt, die eine größere Menge eines linearen Polyketonpolymers, von Bor herrührende Verunreinigungen und einen geringen Anteil eines stabilisierten Additivs, ausgewählt aus der Gruppe der zeolite-artigen Aluminiumsilikate und der amorphen Aluminosilikate beinhaltet.

Zudem betrifft die EP 0 489 517 A1 eine stabilisierte Polyketonzusammensetzung, die gegen Abbau während der Verarbeitungen der Schmelze mit einem geringen Anteil eines ersten Stabilisators umfassend ein Aluminium-Trialkoxid, ein Aluminium-Phenoxid oder ein Aluminium enthaltendes Hydrolyseprodukt derartiger Komponenten sowie einer geringen Menge eines zweiten Stabilisagors, umfassend eine organische Epoxikomponente beinhaltet.

### DARSTELLUNG DER ERFINDUNG

Der Erfindung liegt demnach unter anderem die Aufgabe zugrunde, Formmassen auf Basis von teilkristallinen, aliphatischen Polyketonen bereit zu stellen, die mit einem halogenfreien Flammschutz ausgerüstet sind, sich gut mittels Spritzgießverfahren verarbeiten lassen und gute mechanischen Eigenschaften aufweisen. Die Formmassen sollen vorzugsweise gemäß der Brandschutzklassifizierung nach UL94 bei einer Probendicke von 0,35 bis 3,0 mm, insbesondere bei 0,75 und 1,5 mm V0 sein und eine ausreichende Fliessfähigkeit aufweisen, um auch dünnwandige Formteile in guter Qualität herstellen zu können. Im Hinblick auf die mechanischen Eigenschaften wird gefordert, dass die Bruchfestigkeit und die Bruchdehnung mindestens auf dem Niveau der nicht flammgeschützten Polyketonformmasse bei gleichem Verstärkungsgrad liegen.

Diese Aufgabe wird erfindungsgemäß gelöst durch die Polyamidformmassen gemäß Anspruch 1. Gemäß Patentanspruch 16 wird ein Formkörper aus der erfindungsgemäßen Polyketonformmasse angegeben. Patentanspruch 17 betrifft ein Verfahren zur Herstellung eines erfindungsgemäßen Formkörpers. Die jeweilig abhängigen Patentansprüche betreffen dabei vorteilhafte Ausführungsformen.

Die Erfindung betrifft somit eine Flammgeschützte Polyketonformmasse enthaltend oder bestehend aus
(A) 30 - 94 Gew.-% wenigstens eines teilkristallinen, aliphatischen Polyketons mit einer Schmelztemperatur (Tₘ) im Bereich von 180°C - 280°C, gemessen mittels DSC nach ISO 11357-3 und einer Aufheizrate von 20 K/min;
(B) 0 - 50 Gew.-% wenigstens eines Füll- und Verstärkungsmittels;
(C) 6 - 15 Gew.-% wenigstens eines halogenfreien Flammschutzmittels;
(D) 0 - 2,0 Gew.-% wenigstens eines organischen Phosphits und/oder Phosphonits;
(E) 0 - 10 Gew.-% wenigstens eines Additives;
wobei die Gewichtsprozente der Komponenten (A) bis (E) zusammen 100% ergeben, wobei bevorzugt die Formmasse ausschliesslich aus den Komponenten (A) bis (E) besteht.

Erfindungsgemäß ist das wenigstens eine halogenfreie Flammschutzmittel ausgewählt aus der Gruppe bestehend aus mindestens einer Phosphinsäure, mindestens einer Diphosphinsäure, einem Metallsalz und/oder einem organischen Derivat davon sowie Mischungen oder Kombinationen hiervon, bevorzugt in Kombination mit mindestens einem Synergisten.

Die hier angegebenen und nachfolgenden Konzentrationen oder Konzentrationsbereiche beziehen sich jeweils entweder auf die Summe der Komponenten A bis E für den Fall dass die Formmasse offen formuliert ist ("enthaltend") oder auf die gesamte Formmasse für den Fall, dass die Formmasse geschlossen ("bestehend aus") formuliert ist. In letzterem Fall besteht die Formmasse ausschliesslich aus den Komponenten A bis E.
Gemäß einer bevorzugten Ausführungsform beträgt jeweils unabhängig voneinander oder in Kombination miteinander der Gehalt
(A) des mindestens einen aliphatischen Polyketons 35-83,85 Gew.-%, bevorzugt 40 - 76,7 Gew.-%, besonders bevorzugt 45 - 71,7 Gew.-%, insbesondere 45 - 61,7 Gew.-%,
(B) des wenigstens einen Füll- oder Verstärkungsstoffs 10-50 Gew.-%, bevorzugt 15-45 Gew.-%, weiter bevorzugt 20-40 Gew.-%, insbesondere 30-40 Gew.-%,
(C) des wenigstens einen halogenfreien Flammschutzmittels 7-12 Gew.-%, bevorzugt 8-11 Gew.-%,
(D) des wenigstens einen organischen Phosphits und/oder Phosphonits 0,05 bis 1,5 Gew.-%, bevorzugt aus 0,1 bis 1,0 Gew.-%, und/oder
(E) des wenigstens eines Additives 0,1 - 5 Gew.-%, bevorzugt 0,2 bis 3 Gew.-%,

### Komponente (A)

Die erfindungsgemäß eingesetzte Matrix der Polyketonformmassen basiert auf mindestens einem teilkristallinen, aliphatischen Polyketon (Komponente A), welches einen Schmelzpunkt im Bereich von 180°C - 280°C, bevorzugt von 200°C bis 240°C und besonders bevorzugt von 210°C bis 235°C aufweist, jeweils gemessen mittels DSC nach ISO 11357-3 und einer Aufheizrate von 20 K/min. Bevorzugtermaßen ist der Anteil der Komponente A im Bereich von 35-83,85 Gew.-%.

Bei den aliphatischen Polyketonen handelt es sich um thermoplastische Polymere mit einer linearen alternierenden Struktur, die im Wesentlichen pro Molekül eines ungesättigten Kohlenwasserstoffs ein Kohlenmonoxid-Molekül enthalten. Geeignete ungesättigte Kohlenwasserstoffe sind insbesondere Olefine mit bis zu 20 Kohlenstoffatomen, bevorzugt bis zu 10 Kohlenstoffatomen, wie z.B. Ethen und andere α-Olefine einschließlich Propen, 1-Buten, Isobuten, 1-Hexen, 1-Octen und 1-Dodecen. Weiterhin sind auch olefinisch ungesättigte Verbindungen mit Arylsubsitutenten, wie z.B. Styrol, p-Methylstyrol, p-Ethylstyrol und m-Isopropylstyrol, als Monomer geeignet.

Im Sinne der Erfindung bevorzugte aliphatische Polyketone sind alternierende Copolymere aus Kohlenmonoxid und Ethen oder Terpolymere aus Kohlenmonoxid, Ethen und einem zweiten ethylenisch ungesättigten Kohlenwasserstoff mit mindestens 3 Kohlenstoffatomen, insbesondere mit einem α-Olefin wie Propen oder 1-Buten.

Insbesondere ist das mindestens eine Polyketon (A) ein Terpolymerisat der nachfolgenden allgemeinen Formel 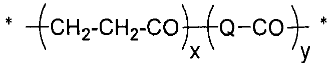 worin Q eine divalente Gruppe, abgeleitet von olefinsich ungesättigten Verbindungen mit mindestens 3 Kohlenstoffatomen ist und das molare Verhältnis y : x kleiner oder gleich 0,5, bevorzugt kleiner 0,2, insbesondere kleiner gleich 0,1 ist, insbesondere von 0,01 bis 0,1 beträgt. Q ist insbesondere die divalente Einheit -CH₂-CH(CH₃)-, die sich von Propen ableitet.

Weiter bevorzugt zeichnet sich das mindestens eine aliphatische Polyketon durch mindestens eine der nachfolgend genannten Eigenschaften aus:
Das Polyketon
   a) ist ein teilkristallines Polyketon, bevorzugt mit einer Schmelztemperatur, gemessen mittels DSC nach ISO 11357-3 bei einer Aufheizrate von 20 K/min im Bereich von 180 °C bis 280 °C, insbesondere von 200 bis 240 °C oder 210 bis 235°C, ist,
   b) weist eine Schmelzviskosität (MVR, melt volume-flow rate), bestimmt nach ISO 1133 bei 240°C und mit einer Auflage von 2,16 kg, im Bereich von 5 - 200 cm³/10min, insbesondere im Bereich 10 - 100 cm³/10min, ganz besonders bevorzugt im Bereich von 20 - 80 cm³/10min, auf
   c) weist eine eine relative Viskosität, gemessen an Lösungen von 0,5 g Polyketon gelöst in 100 ml m-Kresol bei einer Temperatur von 20°C mit einem Kapillarviskosimeter, von 1,5 bis 2,5, vorzugsweise von 1,6 bis 2,2 auf und/oder
   d) weist eine zahlenmittlere Molmasse, bestimmt mittels GPC in Hexafluoroisopropanol relativ zu PMMA-Standards, im Bereich von 20'000 bis 100'000 g/mol, insbesondere von 30'000 bis 60'000 g/mol auf.

Die aliphatischen Polyketonpolymere sind an sich bekannt. Beispielsweise beschreibt die US 4,880,903 ein lineares alternierendes Polyketon-Terpolymer aus Kohlenmonoxid, Ethen und anderen olefinisch ungesättigten Kohlenwasserstoffen, insbesondere Propen. Bei Verfahren zur Herstellung der aliphatischen Polyketone ist in der Regel die Verwendung einer Katalysatorzusammensetzung aus einer Verbindung eines Metalls der Gruppe VIII, ausgewählt unter Palladium, Cobalt oder Nickel, dem Anion einer starken, nicht zu den Halogenwasserstoffsäuren gehörenden Säure und einem zweizähnigen Phosphor-, Arsen- oder Antimonliganden vorgesehen. In der US 4,843,144 wird ein Verfahren zur Herstellung von linearen alternierenden Polyketonpolymeren aus Kohlenmonoxid und mindestens einem olefinisch ungesättigten Kohlenwasserstoff beschrieben, bei dem man einen Katalysator verwendet, der eine Palladiumverbindung, das Anion einer nicht zu den Halogenwasserstoffsäuren gehörenden Säure mit einem pKa-Wert unter 6 und einen zweizähnigen Phosphorliganden enthält. Die Polymerisation wird beispielsweise in Methanol ausgeführt, welches gleichzeitig eine Initiator- und eine Kettentransferfunktion übernimmt, so dass solchermassen hergestellt Polyketone ein typisches Endgruppenmuster aus Keto- und Estergruppen besitzt. Sämtliche der in diesen Patentschriften offenbarten Polyketone eignen sich bevorzugt auch für die Zwecke der vorliegenden Erfindung. Der diesbezügliche Offenbarungsgehalt der zuvor genannten US-Patente wird demzufolge auch mit in die vorliegende Anmeldung einbezogen.

### Komponente (B) - Füll- und Verstärkungsstoffe

Die erfindungsgemäßen Polyketonformmassen bzw. die Summe der Komponenten A bis E enthalten 0 bis 50 Gew.-% Füll- oder Verstärkungsmittel, auch als teilchen- oder faserförmige Füllstoffe bezeichnet. Als Komponente (B) können die erfindungsgemäßen Formmassen 10 - 50 Gew.-%, bevorzugt zwischen 15 - 45 Gew.-% oder 20 - 40 Gew.-% und ganz besonders bevorzugt zwischen 30 und 40 Gew.-% an faser- oder teilchenförmigen Füllstoffen oder deren Mischungen enthalten.

Generell handelt es sich bei der Komponente B vorzugsweise um faser- oder teilchenförmige Füllstoffe oder deren Mischungen.

Faserförmige Füllstoffe sind generell vorzugsweise ausgewählt aus der Gruppe Glasfasern, Kohlenstofffasern (Karbonfasern, Graphitfasern), Aramidfasern und Whiskern.

Die Füllstoffe liegen bevorzugtermaßen in Form endloser Stränge oder in geschnittener Form, insbesondere in Form von Kurzglasfasern (Schnittglas) vor. Vorzugsweise sind die Füllstoffe mit einer Schlichte und/oder einem Haftvermittler ausgerüstet.

Bevorzugt werden als Füllstoffe der Komponente (B) Glasfasern aus E-Glas eingesetzt.

Generell können Fasern der Komponente (B) einen kreisförmigen Querschnitt aufweisen oder einen nicht-kreisförmigen Querschnitt, wobei auch Mischungen von solchen Systemen eingesetzt werden können.

Bevorzugt werden im Fall von runden Fasern solche mit einen Durchmesser von 5 bis 20 µm, bevorzugt von 6 bis 15 µm und besonders bevorzugt von 7 bis 12 µm eingesetzt.

Bevorzugt werden im Fall von flachen Fasern solche eingesetzt, welche ein Verhältnis der senkrecht aufeinander stehenden Querschnittsachsen größer oder gleich 2, insbesondere im Bereich von 2,8 - 4,5, aufweisen, und deren kleinere Querschnittsachse einer Länge von ≥ 4 µm aufweist.

Als Beispiele für faserförmige Füllstoffe seien also faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den aliphatischen Polyketonen können die verwendeten Glasfasern mit einer Schlichte und einem Haftvermittler ausgerüstet sein.

Die Glasfasern bestehen dabei bevorzugt aus E-Glas. Es können aber auch alle anderen Glasfasersorten, wie z.B. A-, C-, D-, M, S-, R-Glasfasern oder beliebige Mischungen davon oder Mischungen mit E-Glasfasern eingesetzt werden. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, Aminosilan oder Epoxysilan, ausgerüstet sein können. Bevorzugt wird Schnittglas, sogenannte Kurzglasfasern aus E- oder S-Glas, verwendet. Bevorzugt werden polare Schlichten, wie sie auch für Polyester oder Polyamide eingesetzt werden.

Geeignete Glasfasern sind sowohl Glasfasern mit kreisförmigem Querschnitt (runde Glasfasern) als auch Glasfasern mit nicht-kreisförmigen Querschnitt (flache Glasfasern).

Die runden Glasfasern weisen einen Durchmesser von 5 bis 20 µm, bevorzugt von 6 bis 15 µm und besonders bevorzugt von 7 bis 12 µm auf.

Vorzugsweise können auch Fasern, bevorzugt Glasfasern mit nicht-kreisförmigen Querschnitt (flache Glasfasern), insbesondere ovale, elliptische, cocoon-artige (zwei oder mehrere runde Glasfasern sind längsseitig miteinander verbunden) oder rechteckige oder nahezu rechteckige Glasfasern, in den erfindungsgemäßen Formmassen eingesetzt werden.

Glasfasern mit nicht-kreisförmigem Querschnitt (flache Glasfasern) haben bevorzugt eine Dimensionierung der Hauptquerschnittachse im Bereich von 10 bis 35 µm, insbesondere im Bereich 18 bis 32 µm und eine Länge der Nebenquerschnittachse im Bereich von 3 bis 15 µm, insbesondere im Bereich von 4 - 10 µm.

Diese Formmassen zeigen dann Vorteile hinsichtlich der Steifheit und Festigkeit, insbesondere in Querrichtung, bei den aus den Formmassen hergestellten Formteilen. Die vorzugsweise eingesetzten flachen Glasfasern (Komponente (B)) sind Kurzglasfasern (Schnittglas) mit flacher Gestalt und einer nicht kreisförmigen Querschnittfläche, wobei das Verhältnis der senkrecht aufeinander stehenden Querschnittsachsen größer oder gleich 2 ist, und die kleinere Querschnittsachse eine Länge von ≥ 4 µm aufweist. Es wird insbesondere eine im Querschnitt möglichst rechteckige Glasfaser bevorzugt. Die Glasfasern liegen in Form von Schnittglas mit einer Länge von 2 bis 50 mm vor. Wie schon oben dargelegt wurde, werden die flachen Glasfasern innerhalb der Komponente B bevorzugt als Schnittglas eingesetzt. Diese Glasfasern weisen Durchmesser der kleinen Querschnittsachse von 4 bis 10 µm und einen Durchmesser der großen Querschnittsachse von 8 bis 30 µm auf, wobei das Verhältnis der senkrecht aufeinander stehenden Querschnittsachsen (Verhältnis von Haupt- zur Nebenquerschnittsachse) zwischen 2 und 6, bevorzugt zwischen 2,5 und 5 und ganz besonders bevorzugt bei 2,8 bis 4,5 liegt.

Die Glasfasern können teilweise oder ganz durch Whisker ersetzt werden. Unter Whisker sind nadelförmige Kristalle, insbesondere Einkristalle aus Metallen, Oxiden, Boriden, Carbiden, Nitriden, Polytitanat, Kohlenstoff usw. mit meist polygonalem Querschnitt zu verstehen, z. B. Kaliumtitanat-, Aluminiumoxyd-, Siliciumcarbid-Whiskers. Whiskers weisen im Allgemeinen einen Durchmesser von 0,1 bis 10 µm und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS Mechanismus) oder aus einem Dreiphasensystem (VLS-Mechanismus).

Teilchenförmige Füllstoffe der Komponente (B) sind bevorzugtermaßen auf mineralischer Basis, insbesondere bevorzugt auf Basis von Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Voll- oder Hohl-Glaskugeln oder gemahlenem Glas, Glasflakes, dauerhaft magnetische bzw. magnetisierbare Metallverbindungen und/oder Legierungen, Pigmente, insbesondere Bariumsulfat, Titandioxid, Zinkoxid, Zinksulfid, Eisenoxid, Kupferchromit, oder Mischungen davon ausgewählt sind. Die Füllstoffe können auch oberflächenbehandelt sein.

### Komponente (C)

Die erfindungsgemäße Formmasse enthält weiterhin 6 - 15 Gew.-%, bevorzugt 7 - 12 Gew.-% und insbesondere 8 - 11 Gew.-% eines organischen halogenfreien Flammschutzmittels oder eine Kombination aus unterschiedlichen organischen halogenfreien Flammschutzmitteln oder ein solches Flammschutzmittel in Kombination mit einem oder mehreren Synergisten (Komponente C). Bevorzugtermaßen ist die gesamte Komponente (C) halogenfrei.

Eine weitere bevorzugte Ausführungsform ist also dadurch gekennzeichnet, dass der Anteil an Komponente (C) im Bereich von 7 - 12 Gew.-%, bevorzugtermaßen im Bereich von 8 - 11 Gew.-% liegt, und wobei vorzugsweise die Komponente (C) wenigstens teilweise auf Basis eines Phosphinsäuresalzes und/oder Diphosphinsäuresalzes ausgebildet ist.

Das Flammschutzmittel in der Komponente (C) oder die Komponente (C) als ganzes bildend umfasst dabei gemäß einer weiteren bevorzugten Ausführungsform 60 - 100 Gew.-%, bevorzugt 70 - 98 Gew.-%, insbesondere 80 - 96 Gew.-% eines Phosphinsäuresalzes und/oder Diphosphinsäuresalzes (Komponente C1) sowie 0 - 40 Gew.-%, bevorzugt 2 - 30 Gew.-%, insbesondere 4 - 20 Gew.-% eines Synergisten, insbesondere eines stickstoffhaltigen Synergisten und/oder eines Stickstoff und Phosphor enthaltenden Flammschutzmittels (Komponente C2).

Allgemein formuliert ist diese bevorzugte Ausführungsform dadurch gekennzeichnet, dass die Komponente (C) folgende Komponenten umfasst, vorzugsweise aus folgenden Komponenten besteht:
(C1) 60 - 100 Gew.-%, bevorzugt 70 - 98 Gew.-%, insbesondere 80 - 96 Gew.-% eines Phosphinsäuresalzes und/oder Diphosphinsäuresalzes;
(C2) 0 - 40 Gew.-%, bevorzugt 2 - 30 Gew.-%, insbesondere 4 - 20 Gew.-% eines Synergisten, insbesondere eines stickstoffhaltigen Synergisten und/oder eines Stickstoff und Phosphor enthaltenden Flammschutzmittels, bevorzugt Melamin oder Kondensationsprodukte des Melamins, wie insbesondere bevorzugt ausgewählt aus der Gruppe: Melem, Melam, Melon, Umsetzungsprodukte von Melamin mit Polyphosphorsäure, Umsetzungsprodukte von Kondensationsprodukten des Melamins mit Polyphosphorsäure oder Mischungen davon.

Die Konzentrationsangaben für die Komponenten C1 und C2 beziehen sich jeweils auf die Komponente C als Ganzes, sind also nicht auf die Summe A bis E oder die Formmasse bezogen.

Bei Komponente (C2) handelt es sich bevorzugt um Melamin oder Kondensationsprodukte des Melamins, wie z.B. Melem, Melam, Melon, oder um Umsetzungsprodukte von Melamin mit Polyphosphorsäure, um Umsetzungsprodukte von Kondensationsprodukten des Melamins mit Polyphosphorsäure oder Gemische davon. Als Komponente (C2) wird insbesondere Melaminpolyphosphat bevorzugt. Derartige Flammschutzmittel sind aus dem Stand der Technik bekannt. Hierzu wird auf die DE 103 46 3261 verwiesen, diesbezüglich sei der Offenbarungsgehalt dieser Schrift ausdrücklich hierin eingeschlossen. In einer weiteren Ausführungsform ist Komponente (C2) als Synergist bevorzugt als eine sauerstoff-, stickstoff- oder schwefelhaltige Metallverbindung ausgewählt. Dabei bevorzugte Metalle sind Aluminium, Calcium, Magnesium, Barium, Natrium, Kalium und Zink. Geeignete Verbindungen sind ausgewählt aus der Gruppe der Oxide, Hydroxide, Carbonate, Silikate, Borate, Phosphate, Stannate, Alkoxide, Carboxylate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Bariumcarbonat, Magnesiumhyroxid, Aluminiumhydroxid, Böhmit, Pseudoböhmit, Dihydrotalcit, Hydrocalumit, Calciumhydroxid, Calciumhydroxylapatit, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat. Auch möglich sind Systeme wie Calciumstearat, Zinkstearat, Magnesiumstearat, Bariumstearat Kaliumpalmitat, Magnesiumbehenat. Für den Fall, dass als Komponente (C2) Synergisten enthalten sind, die gegebenenfalls auch als Füll- und Verstärkungsmittel (Komponente (B)) enthalten sind, sind diese Stoffe dann nicht mehr als Füll- und Verstärkungsstoffe enthalten.
Gemäß einer weiteren bevorzugten Ausführungsform ist die Komponente (C1) ein Phosphinsäuresalz der allgemeinen Formel (I) und/oder Formel (II) und/oder deren Polymere: 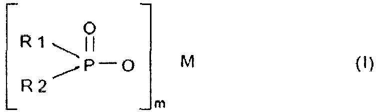 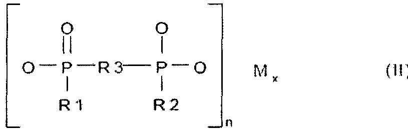 wobei
R1, R2 gleich oder verschieden sind und bevorzugt C1-C8-Alkyl, linear oder verzweigt, gesättigt, ungesättigt, oder teilweise ungesättigt und/oder Aryl sind;
R3 C1-C10-Alkylen, linear oder verzweigt, gesättigt, ungesättigt, oder teilweise ungesättigt, C6-C10-Arylen, Alkylarylen oder Arylalkylen sind;
M ein Metallion aus der 2. oder 3. Haupt- oder Nebengruppe des Periodensystems ist, bevorzugt Aluminium, Barium, Calcium, Magnesium und/oder Zink; und m = 2 oder 3; n = 1 oder 3; x = 1 oder 2. Als Metallion M werden bevorzugt Aluminium und Zink verwendet.

Geeignete Phosphinsäuren für die Herstellung der erfindungsgemäßen Phosphinsäuresalze sind beispielsweise Dimethylphosphinsäure, Ethylmethylphosphinsäure, Diethylphosphinsäure, Methyl-n-propylphosphinsäure, Methan-di(methylphosphinsäure), Ethan-1,2-di(methyl-phosphinsäure), Hexan-1,6-di(methylphosphinsäure), Benzol-1,4-di(methylphosphinsäure), Methyl-phenyl-phosphinsäure, Diphenylphosphinsäure. Die Phosphinsäuresalze können z.B. hergestellt werden, indem die Phosphinsäuren in wässriger Lösung mit Metallcarbonaten, Metallhydroxiden oder Metalloxiden umgesetzt werden, wobei im Wesentlichen monomere, je nach Reaktionsbedingungen unter Umständen auch polymere Phosphinsäuresalze entstehen.

Bei den erfindungsgemäßen Polyamid-Formassen bzw. bei den daraus hergestellten Formkörpern ist somit weiterhin hervorzuheben, dass in Kombination zu den vorstehend beschriebenen ausgezeichneten Eigenschaften auch ein herausragender Flammschutz erreicht wird. Die Formmasse ist nach UL-Klassifizierung V0 bei 0,35 bis 3,0 mm dicken Probenkörper (UL-94, Prüfung nach den Normen der Underwriters Laboratories (U.L.), vgl. www.ulstandards.com).

### Komponente (D)

Die Formmassen bzw. die Summe der Komponenten A bis E enthalten oder bestehen aus 0 - 2,0 Gew.-%, bevorzugt aus 0,05 bis 1,5 Gew.-%, insbesondere bevorzugt aus 0,1 bis 1,0 Gew.-% wenigstens eines organischen Phosphits oder Phosphonits.

Bevorzugte organische Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis-(2,4-di-tert-butylphenyl)-4,4'-biphenylendiphos-phonit, 6-Isooctyloxy-2,4,8,10-tetra-tert-butyl-12H-dibenz-[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit.

Insbesondere werden bevorzugt Bis(2,6-di-t-butyl-4-methylphenyl)-pentaerythritol diphosphite, Tris[2-tert-butyl-4-thio(2'-methyl-4'-hydroxy-5'-tert-butyl)-phenyl-5-methyl] phenylphosphit, Tris(2,4-di-tert-butylphenyl)-phosphit und Tetrakis(2,4-di-t-butylphenyl)-4,4'-biphenylen diphosphonit (Sandostab P-EPQ", hergestellt von Clariant).

### Komponente (E)

Als Komponente (E) enthalten die Formmassen 0 - 10 Gew.-%, bevorzugt 0,1 - 5 Gew.-% und besonders bevorzugt 0,2 bis 3 Gew.-% wenigstens eines Additivs oder Verarbeitungshilfsmittels. Die Additive bzw. Verarbeitungshilfsmittel unterscheiden sich dabei von den Komponenten (A) bis (D).

Die Formmassen können Stabilisatoren (Hitze- und Lichtstabilisatoren, Antioxidantien) Verarbeitungshilfsmittel und weitere Polymere, insbesondere Polyolefine, säure- oder anhydrid-modifizierte Polyolefine, Polyester, Polyamide, insbesondere aliphatische Polyamide, Schlagzähmodifikatoren und weitere Additive enthalten.

Die Additive bzw. Verarbeitungshilfsmittel sind dabei verschieden von den Füll- und Verstärkungsmitteln bzw. den Flammschutzmitteln, insbesondere von den Synergisten (C2), die gegebenenfalls in den Flammschutzmitteln enthalten sein können.

Bei der Komponente (E) handelt es sich normalerweise generell um Additive und/ oder weitere Polymere beispielsweise ausgewählt aus der folgenden Gruppe: Schlagzähmodifikatoren, Haftvermittler, Kristallisations-Beschleuniger oder -Verzögerer, Fliesshilfsmittel, Gleitmittel, Entformungsmittel, Weichmacher, Stabilisatoren, Verarbeitungshilfsmittel, Antistatika, Pigmente, Farb- und Markierungsstoffe, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie z.B. Monosäuren oder Monoamine.

Der Anteil an Komponente E liegt gemäß einer bevorzugten Ausführungsform im Bereich von 0,1 - 10 Gew.-%, bevorzugtermaßen im Bereich von 0,2 - 3 Gew.-%.

Die Erfindung betrifft weiterhin auch die Verwendung der oben beschriebenen Formmassen zur Herstellung von thermoplastisch verarbeitbaren Formartikeln sowie aus den erfindungsgemäßen Zusammensetzungen erhältliche Formartikel.

Beispiele derartiger Formartikel schliessen ein: Gehäuse und Funktionsteile für Pumpen, Getriebe, Ventile und Wasserzähler, Drosselklappen, Zylinder, Kolben, Scheinwerfergehäuse, Reflektoren, Kurvenlichtverstellung, Zahnräder, Motor- und Getriebelager, Steckverbindungen, Konnektoren, Profile, Folien oder Schichten von Mehrschichtfolien, Fasern, elektronische Bauteile, insbesondere Bauteile für tragbare elektronische Geräte, Gehäuse für elektronische Bauteile, Konnektoren, Mobiltelefongehäuse, Komponenten für LED-Gehäuse, Gehäuse oder Gehäuseteile für Personalcomputer, insbesondere Notebook-Gehäuse, Werkzeuge, Verbundwerkstoffe, Fluid führende Leitungen und Behälter, insbesondere im Automobilbereich, glatte und gewellte Mono- oder Mehrschichtrohre, Rohrabschnitte, Stutzen, Fittings zum Verbinden von Schläuchen, Wellrohren und medienführenden Leitungen, Bestandteil von Mehrschichtleitungen (Innen-, Aussen- oder Zwischenschicht), einzelne Schichten bei Mehrschichtbehältern, Hydraulikleitungen, Bremsleitungen, Kupplungsleitungen, Kühlflüssigkeitsleitungen, Bremsflüssigkeitsbehälter, etc. Die Formartikel sind durch die Verfahren Spritzguss, Extrusion oder Blasformen herstellbar.

### Beschreibung bevorzugter Ausführungsformen

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Polyketonformmassen:

Die Rohstoffe der Komponenten (A), (C) und (D) werden vorgemischt und gravimetrisch in den Einzug eines Zweiwellenextruder vom Typ ZSK25 (Werner u. Pfleiderer) dosiert. Komponente (B) wird über einen Sidefeeder 4 Gehäuseeinheiten vor dem Austrag in die Schmelze dosiert. Es wird bei Zylindertemperaturen von 200 - 270° C bei einer Schneckendrehzahl von 200 rpm und einem Durchsatz von 10 kg/h gearbeitet. Der Compound wird über eine Düse ausgetragen und nach Abkühlen des Strangs granuliert. Anschliessend wird bei 100 °C 24 h im Vakuum getrocknet.

### Herstellung der Formkörper:

Die Herstellung der Formkörper erfolgt auf einer Spritzgussmaschine Arburg Allrounder 420C-1000-250 mit ansteigendem Zylindertemperaturprofil im Bereich von 200 - 270°C und Einspritzdrücken von 1000 - 1800 bar. Die Formtemperatur beträgt 80°C. Die Geometrie der Formkörper entspricht den Vorgaben der entsprechenden Prüfnormen.

Die Zusammensetzungen der Formmassen und die Eigenschaften der daraus hergestellten Formkörper sind in der Tabelle 1 zusammengefasst.

Folgende Materialien wurden eingesetzt:

| | |
|---|---|
| PK-EP: | Mittelviskoses aliphatisches Polyketon aus Kohlenmonoxid, Ethylen und Propylen mit Schmelzpunkt von 220°C, MFR (240°C, 2,16kg) von 60g/10min, Hyosung Co. Ltd. |
| Exolit OP1230: | Aluminium-tris-diethylphophinat, Clariant, CH |
| Magnifin H10 IV: | Hochreines Magnesiumhydroxid, Albemarle |
| Glasfaser: | Glasfaser mit rundem Querschnitt für Polyamide, Faserlänge 4,5 mm, Durchmesser 10 µm, Vetrotex |
| Sandostab P-EPQ | Tetrakis(2,4-di-t-butylphenyl)-4,4'-biphenylen-diphosphonit (CAS: 38613-77-3), Clariant |
| Stabilisator: | Irganox 1010, sterisch gehindertes phenolisches Antioxidans (BASF SE) |

**Tabelle 1: Beispiele B1-B3 nach der Erfindung und Vergleichsbeispiele VB1 - VB4**

| | | B1 | B2 | B3 | VB1 | VB2 | VB3 | VB4 |
|---|---|---|---|---|---|---|---|---|
| PK-EP | G-% | 59,3 | 59,7 | 62,3 | 39,7 | 49,7 | 54,7 | 69,5 |
| Glasfasern | G-% | 30,0 | 30,0 | 30,0 | 30,0 | 20,0 | 15,0 | 30,0 |
| Sandostab P-EPQ | G-% | 0,2 | | 0,2 | | | | |
| Exolit OP1230 | G-% | 10,0 | 10,0 | 7,0 | | | | |
| Magnifin H10 IV | G-% | | | | 30,0 | 30,0 | 30,0 | |
| Stabilisator | G-% | 0,5 | 0,3 | 0,5 | 0,3 | 0,3 | 0,3 | 0,5 |
| Eigenschaften | | | | | | | | |
| E-Modul | MPa | 9300 | 9300 | 9100 | 11700 | 9100 | 7500 | 8500 |
| Bruchfestigkeit | MPa | 126 | 123 | 132 | 130 | 114 | 107 | 112 |
| Bruchdehnung | % | 5,0 | 5,1 | 5,2 | 2,6 | 2,8 | 3,4 | 2,6 |
| Schlag 23°C | kJ/m² | 85 | 78 | 86 | 54 | 52 | 56 | 52 |
| Schlag -30°C | kJ/m² | 76 | 70 | 75 | 30 | 32 | 33 | 40 |
| Kerbschlag 23°C | kJ/m ² | 13 | 13 | 14 | 9 | 8 | 8 | 12 |
| Kerbschlag -30°C | kJ/m² | 10 | 10 | 11 | 6 | 6 | 5 | 9 |
| Brandtest | | | | | | | | |
| Dicke 0.75 mm | - | V0 | V0 | V0 | V0 | V0 | V0 | HB |
| Dicke 1.5 mm | | V0 | V0 | V0 | V0 | V0 | V0 | HB |
| HDTA (1.80 MPa) | °C | 205 | 208 | 205 | 174 | 170 | 168 | 204 |
| HDT C (8.00 MPa) | °C | 145 | 148 | 143 | 122 | 115 | 108 | 162 |
| MVR (250°C/21.6kg) | cm³/10 min | 51 | 60 | 68 | 32 | 36 | 20 | 326 |

| | | | | | | | | |
|---|---|---|---|---|---|---|---|---|
| G-% = Gew.-% (Gewichtsprozent) | | | | | | | | |

Die Messungen wurden nach folgenden Normen und an folgenden Prüfkörpern im trockenen Zustand durchgeführt. D.h. die Prüfkörper werden nach dem Spritzguss mindestens 48 h bei Raumtemperatur in trockener Umgebung, über Silicagel, gelagert, bevor sie den Prüfungen zugeführt werden. Das thermische Verhalten (Schmelzpunkt (TM), Schmelzenthalpie (ΔHm), Glasumwandlungstemperatur (Tg)) wurde anhand der ISO-Norm 11357 (11357-2 für die Glasübergangstemperatur, 11357-3 für die Schmelztemperatur und die Schmelzenthalpie) am Granulat bestimmt. Die Differential Scanning Calorimetry (DSC) wurde mit Aufheizrate von 20 °C/min durchgeführt. Die relative Viskosität (ηrel) wurde bestimmt nach DIN EN ISO 307 an Lösungen von 0,5 g Polymer gelöst in 100 ml m-Kresol bei einer Temperatur von 20°C. Als Probe wird Granulat verwendet.

Zug-E-Modul, Bruchfestigkeit und Bruchdehnung: Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 5 mm/min (Bruchfestigkeit, Bruchdehnung) am ISO-Zugstab, Norm ISO/CD 3167, Typ Al, 170 x 20/10 x 4mm bei Temperatur 23°C bestimmt.

Schlagzähigkeit und Kerbschlagzähigkeit nach Charpy wurden nach ISO 179/keU bzw. ISO 179/keA am ISO-Prüfstab, Norm ISO/CD 3167, Typ B1, 80 x 10 x 4mm bei einer Temperatur von 23°C gemessen.

Der MVR (Schmelze-Volumenfließrate oder Melt Volume-flow Rate) wird nach ISO 1133 mittels eines Kapillarrheometers ermittelt, wobei das Material (Granulat) in einem beheizbaren Zylinder bei einer Temperatur von 250°C aufgeschmolzen und unter einem durch die Auflagelast von 21,6 kg entstehenden Druck durch eine definierte Düse (Kapillare) gedrückt wird. Ermittelt wird das austretende Volumen der Polymerschmelze als Funktion der Zeit.

Die Wärmeformbeständigkeit in Form von HDT A (1,80 MPa) und HDT C (8,00 MPa) wurde gemäß ISO 75-1 und ISO 75-2 an ISO-Schlagstäben der Dimension 80x10x4 mm (Probekörper in Flachkant-Position), bestimmt.

Der Brandtest erfolgte nach UL-94 ("Tests for Flammability of Plastic Materials for Parts in Devices and Applications" der Underwriters Laboratories) an Prüfkörpern der Dimension 127 x 12,7 x 0,35, 127 x 12,7 x 0,75, 125 x 13,0 x 1,5 und 125 x 13,0 x 3,0 mm mit üblicher Konditionierung (7 Tage, 70°C).

### Resultate:

Formmassen gemäß dem Stand der Technik ausgerüstet mit Magnesiumhydroxid besitzen bei gleichem Glasfasergehalt (VB1) deutlich höhere E-Moduli als die erfindungsgemäßen Formmassen, da eine höhere Konzentration an diesem anorganischem Flammschutzmittel erforderlich ist, um die Brandschutzklassifizierung V0 sicher zu erreichen.

Die Bruchfestigkeit der erfindungsgemäßen Formmassen liegt mindestens auf dem Niveau der Formmassen des Standes der Technik, übertreffen diese jedoch beim Vergleich von Formmassen mit ähnlicher Steifigkeit.

Bruchdehnung sowie Schlag und Kerbschlag, sowohl bei Raumtemperatur als auch bei tiefen Temperaturen, liegen deutlich über den Vergleichsbeispielen. Weiterhin verhindert das erfindungsgemäße Flammschutzmittel ein allzu starkes Ansteigen der Schmelzviskosität (MVR), so dass die Formmassen nach der Erfindung immer noch genügend fließfähig sind, um auch dünnwandige Formteile problemlos herstellen zu können.

Gegebenenfalls kann es auch möglich sein, dass die erfindungsgemäßen Polyketonformmassen frei von Magnesiumhydroxid sind.

## Patentansprüche

1. Flammgeschützte Polyketonformmasse enthaltend oder bestehend aus
(A) 30 - 94 Gew.-% wenigstens eines teilkristallinen, aliphatischen Polyketons mit einer Schmelztemperatur (Tₘ) im Bereich von 180°C - 280°C, gemessen mittels DSC nach ISO 11357-3 und einer Aufheizrate von 20 K/min;
(B) 0 - 50 Gew.-% wenigstens eines Füll- und Verstärkungsmittels;
(C) 6 - 15 Gew.-% wenigstens eines halogenfreien Flammschutzmittels;
(D) 0 - 2.0 Gew.-% wenigstens eines organischen Phosphits und/oder Phosphonits;
(E) 0 - 10 Gew.-% wenigstens eines Additives;
wobei die Gewichtsprozente der Komponenten (A) bis (E) zusammen 100% ergeben, wobei bevorzugt die Formmasse ausschliesslich aus den Komponenten (A) bis (E) besteht,
**dadurch gekennzeichnet, dass** das wenigstens eine halogenfreie Flammschutzmittel ausgewählt ist aus der Gruppe bestehend aus mindestens einer Phosphinsäure, mindestens einer Diphosphinsäure, einem Metallsalz und/oder einem organischen Derivat davon sowie Mischungen oder Kombinationen hiervon, bevorzugt in Kombination mit mindestens einem Synergisten.

2. Polyketonformmasse nach Anspruch 1, **dadurch gekennzeichnet, dass** jeweils unabhängig voneinander oder in Kombination miteinander der Gehalt
(A) des mindestens einen aliphatischen Polyketons von 35-83,85 Gew.-%, bevorzugt 40 bis 76,7 Gew.-%, weiter bevorzugt von 45 - 71,7 Gew.-%, insbesondere von 45 bis 61,7 Gew.-%,
(B) des wenigstens einen Füll- oder Verstärkungsstoffs 10-50 Gew.-%, bevorzugt 15-45 Gew.-%, weiter bevorzugt 20-40 Gew.-%, insbesondere 30-40 Gew.-%,
(C) des wenigstens einen halogenfreien Flammschutzmittels 7-12 Gew.-%, bevorzugt 8-11 Gew.-%,
(D) des wenigstens einen organischen Phosphits und/oder Phosphonits 0,05 bis 1,5 Gew.-%, bevorzugt aus 0.1 bis 1,0 Gew.-%, und/oder
(E) des wenigstens eines Additives 0,1- 5 Gew.-%, bevorzugt 0,2 bis 3 Gew.-%
beträgt.

3. Polyketonformmasse nach einem der vorhergehenden Ansprüche, **dadurch gekennzeichnet, dass** das mindestens eine Polyketon (A) ein Polymerisat von Kohlenmonoxid und mindestens olefinisch ungesättigten Verbindung, bevorzugt ausgewählt aus der Gruppe bestehend aus Ethen und mindestens einer weiteren olefinisch ungesättigten Verbindung mit mindestens 3 bis bevorzugt 20 Kohlenstoffatomen wie z.B. Propen, 1-Buten, Isobuten, 1-Hexen, 1-Octen, 1-Dodecen, Styrol, p-Methylstyrol, p-Ethylstyrol, m-Isopropylstyrol sowie Mischungen oder Kombinationen hiervon; besonders bevorzugt ein Polymerisat von Kohlenmonoxid und Ethen oder ein Terpolymerisat von Kohlenmonoxid, Ethen und Propen oder 1-Buten, ist.

4. Polyketonformmasse nach einem der vorhergehenden Ansprüche, **dadurch gekennzeichnet, dass** das mindestens eine Polyketon (A) ein Terpolymerisat der nachfolgenden allgemeinen Formel ist 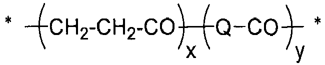 worin Q eine divalente Gruppe, abgeleitet von olefinsich ungesättigten Verbindungen mit mindestens 3 Kohlenstoffatomen ist und das molare Verhältnis y : x kleiner oder gleich 0,5, bevorzugt kleiner 0,2, insbesondere kleiner gleich 0,1 ist, insbesondere von 0,01 bis 0,1 beträgt.

5. Polyketonformmasse nach einem der vorhergehenden Ansprüche, **dadurch gekennzeichnet, dass** das mindestens eine aliphatische Polyketon
a) ein teilkristallines Polyketon, bevorzugt mit einer Schmelztemperatur, gemessen mittels DSC nach ISO 11357-3 bei einer Aufheizrate von 20 K/min im Bereich von 180 °C bis 280 °C, bevorzugt von 200 bis 240 °C, besonders bevorzugt von 210 bis 235°C, ist,
b) eine Schmelzviskosität (MVR, melt volume-flow rate), bestimmt nach ISO 1133 bei 240°C und mit einer Auflage von 2.16 kg, im Bereich von 5 - 200 cm³/10min, insbesondere im Bereich 10 - 100 cm³/10min, ganz besonders bevorzugt im Bereich von 20 - 80 cm³/10min, aufweist,
c) eine relative Viskosität, gemessen an Lösungen von 0,5 g Polyketon gelöst in 100 ml m-Kresol bei einer Temperatur von 20°C mit einem Kapillarviskosimeter, von 1,5 bis 2,5, vorzugsweise von 1,6 bis 2,2 aufweist und/oder
d) eine zahlenmittlere Molmasse, bestimmt mittels GPC in Hexafluoroisopropanol relativ zu PMMA-Standards, im Bereich von 20'000 bis 100'000 g/mol, insbesondere von 30'000 bis 60'000 g/mol aufweist.

6. Polyketonformmasse nach einem der vorhergehenden Ansprüche, **dadurch gekennzeichnet, dass** die Füll- oder Verstärkungsstoffe ausgewählt sind aus der Gruppe bestehend aus faser- oder teilchenförmigen Füllstoffen oder deren Mischungen, die bevorzugt mit einer Schlichte und/oder einem Haftvermittler ausgerüstet sind.

7. Polyketonformmasse nach vorhergehendem Anspruch, **dadurch gekennzeichnet, dass** die faserförmigen Füllstoffe
a) ausgewählt sind aus der Gruppe bestehend aus Glasfasern, Kohlenstofffasern, Metallfasern, Aramidfasern, Basaltfasern und Whiskern sowie Mischungen oder Kombinationen hieraus,
b) in Form endloser Stränge und/oder in geschnittener Form, insbesondere in Form von Kurzglasfasern (Schnittglas) vorliegen, und/oder
c) kreisförmigen Querschnitt oder nicht-kreisförmigen Querschnitt aufweisen, wobei auch Mischungen von solchen Systemen eingesetzt werden können.

8. Polyketonformmasse nach Anspruch 6, **dadurch gekennzeichnet, dass** die teilchenförmigen Füllstoffe ausgewählt sind aus der Gruppe bestehend aus mineralischen teilchenförmigen Füllstoffen, bevorzugt Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Voll- oder Hohl-Glaskugeln oder gemahlenem Glas, Glasflakes, dauerhaft magnetische bzw. magnetisierbare Metallverbindungen und/oder Legierungen, Pigmente, insbesondere Bariumsulfat, Titandioxid, Zinkoxid, Zinksulfid, Eisenoxid, Kupferchromit, oder Mischungen davon.

9. Polyketonformmasse nach einem der vorhergehenden Ansprüche, **dadurch gekennzeichnet, dass** das wenigstens eine halogenfreien Flammschutzmittel
(C1) 60 - 100 Gew.-%, bevorzugt 70 - 98 Gew.-%, insbesondere 80 - 96 Gew.-% mindestens einer Phosphinsäure, mindestens einer Diphosphinsäure, einem Metallsalz und/oder einem organischen Derivat davon sowie
(C2) 0 - 40 Gew.-%, bevorzugt 2 - 30 Gew.-%, insbesondere 4 - 20 Gew.-% mindestens eines Synergisten
umfasst oder hieraus besteht.

10. Polyketonformmasse nach vorhergehendem Anspruch, **dadurch gekennzeichnet, dass**
(C1) die mindestens eine Phosphinsäure sowie die hiervon abgeleiteten Metallsalze die nachfolgend abgebildete allgemeine Formel I aufweisen bzw. die mindestens eine Diphosphinsäure sowie die hiervon abgeleiteten Metallsalze die nachfolgend abgebildete allgemeine Formel II aufweisen 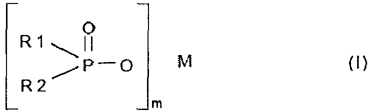 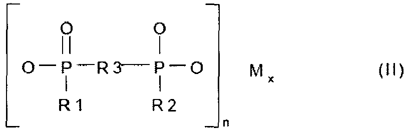 wobei
R1, R2 gleich oder verschieden sind und bevorzugt C1-C8-Alkyl, linear oder verzweigt, gesättigt, ungesättigt, oder teilweise ungesättigt und/oder Aryl sind;
R3 C1-C10-Alkylen, linear oder verzweigt, gesättigt, ungesättigt, oder teilweise ungesättigt, C6-C10-Arylen, Alkylarylen oder Arylalkylen sind;
M ein Wasserstoffion (Proton) oder ein Metallion aus der 2. oder 3. Haupt- oder Nebengruppe des Periodensystems ist, bevorzugt Aluminium, Barium, Calcium, Magnesium und/oder Zink; und m = 2 oder 3; n = 1 oder 3; x = 1 oder 2
und/oder
(C2) der mindestens eine Synergist ausgewählt ist aus der Gruppe bestehend aus
Stickstoff und/oder Phosphor enthaltenden Syngergisten, bevorzugt Melamin oder Kondensationsprodukte des Melamins, insbesondere bevorzugt ausgewählt aus der Gruppe bestehend aus Melem, Melam, Melon, Umsetzungsprodukte von Melamin mit Polyphosphorsäure, Umsetzungsprodukte von Kondensationsprodukten des Melamins mit Polyphosphorsäure oder Mischungen davon,
sauerstoff-, stickstoff- oder schwefelhaltigen Metallverbindungen, wobei bevorzugte Metalle Aluminium, Calcium, Magnesium, Barium, Natrium, Kalium und Zink sind, weiter bevorzugt die Metallverbindungen ausgewählt sind aus der Gruppe bestehend aus Oxiden, Hydroxiden, Carbonaten, Silikaten, Boraten, Phosphaten, Stannaten, Alkoxiden, Carboxylaten sowie Kombinationen oder Mischungen dieser Verbindungen, wie z.B. Oxid-Hydroxide oder Oxid-Hydroxid-Carbonate, insbesondere Magnesiumoxid, Calciumoxid, Aluminiumoxid, Zinkoxid, Bariumcarbonat, Magnesiumhyroxid, Aluminiumhydroxid, Böhmit, Pseudoböhmit, Dihydrotalcit, Hydrocalumit, Calciumhydroxid, Calciumhydroxylapatit, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat, Calciumstearat, Zinkstearat, Magnesiumstearat, Bariumstearat Kaliumpalmitat, Magnesiumbehenat, sowie Mischungen und/oder Kombinationen von zumindest zwei der zuvor genannten Verbindungen.

11. Polyketonformmasse nach einem der vorhergehenden Ansprüche, **dadurch gekennzeichnet, dass** das wenigstens eine organische Phosphit und Phosphonit ausgewählt ist aus der Gruppe bestehend aus Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)-phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritol-diphosphit, Bis(2,4,6-tris-(tert-butylphenyl))pentaerythritol-diphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]-phenyl-phosphit, Tris(2,4-di-tert-butylphenyl)phosphit sowie Mischungen und Kombinationen hiervon.

12. Polyketonformmasse nach einem der vorhergehenden Ansprüche, **dadurch gekennzeichnet, dass** das mindestens eine Additiv ausgewählt ist aus der Gruppe bestehend aus Stabilisatoren, insbesondere Hitze-, UV- und/oder Lichtstabilisatoren, Antioxidantien, Verarbeitungshilfsmitteln, von aliphatischen Polyketonen verschiedenen Polymeren, insbesondere Polyolefinen, säure- oder anhydrid-modifizierte Polyolefinen, Polyestern, Polyamiden, insbesondere aliphatische Polyamiden, Schlagzähmodifikatoren, Haftvermittlern, Kristallisations-Beschleunigern oder-Verzögerern, Fließhilfsmitteln, Gleitmitteln, Entformungsmitteln, Weichmachern, Radikalfängern, Antistatika, Pigmenten, Farb- und Markierungsstoffen, Nanoteilchen in Plättchenform, Schichtsilikate, Leitfähigkeitsadditive, wie Ruß, Graphitpulver oder Kohlenstoffnanofibrillen, Residuen aus Polymerisationsverfahren wie Katalysatoren, Salzen und deren Derivate, sauerstoff-, stickstoff- oder schwefelhaltigen Metallverbindungen sowie Reglern wie z.B. Monosäuren oder Monoamine sowie Mischungen oder Kombinationen hieraus.

13. Polyketonformmasse nach einem der vorhergehenden Ansprüche, **gekennzeichnet durch** eine Klassifizierung V0 bei 0,35 bis 3,0 mm, insbesondere bei 0,75 mm und 1,5 mm dicken Probenkörpern gemäß UL-94.

14. Formkörper, hergestellt aus einer Polyketonformmasse nach einem der vorhergehenden Ansprüche, insbesondere in Form von Gehäusen, Funktionsteilen für Pumpen, Getriebe, Ventilen, Wasserzählern, Drosselklappen, Zylinder, Kolben, Scheinwerfergehäuse, Reflektoren, Kurvenlichtverstellungen, Zahnrädern, Motor- und Getriebelagern, Steckverbindungen, Konnektoren, Profilen, Folien oder Schichten von Mehrschichtfolien, Fasern, elektronischen Bauteilen, insbesondere Bauteilen für tragbare elektronische Geräte, Gehäusen für elektronische Bauteile, Konnektoren, Mobiltelefongehäusen, Komponenten für LED-Gehäuse, Gehäusen oder Gehäuseteilen für Personalcomputer, insbesondere Notebook-Gehäusen, Werkzeugen, Verbundwerkstoffen, Fluid führenden Leitungen und Behältern, insbesondere im Automobilbereich, glatte und gewellte Mono- oder Mehrschichtrohren, Rohrabschnitten, Stutzen, Fittings zum Verbinden von Schläuchen, Wellrohren und medienführenden Leitungen, Bestandteilen von Mehrschichtleitungen (Innen-, Außen- oder Zwischenschicht), einzelne Schichten bei Mehrschichtbehältern, Hydraulikleitungen, Bremsleitungen, Kupplungsleitungen, Kühlflüssigkeitsleitungen oder Bremsflüssigkeitsbehälter.

15. Verfahren zur Herstellung eines Formkörpers nach vorhergehendem Anspruch, mittels Spritzguss, Extrusion oder Blasformen.

## Claims

1. Flameproof polyketone moulding compound comprising or consisting of
(A) 30 - 94% by weight of at least one partially crystalline, aliphatic polyketone with a melting temperature (Tₘ) in the range of 180°C - 280°C, measured by means of DSC according to ISO 11357-3 and at a heating rate of 20 K/min;
(B) 0 - 50% by weight of at least one filling- and reinforcing means;
(C) 6 - 15% by weight of at least one halogen-free flame retardant;
(D) 0 - 2.0% by weight of at least one organic phosphite and/or phosphonite;
(E) 0 - 10% by weight of at least one additive;
the percentages by weight of components (A) to (E) together producing 100%, the moulding compound preferably consisting exclusively of components (A) to (E),
**characterised in that** the at least one halogen-free flame retardant is selected from the group consisting of at least one phosphinic acid, at least one diphosphinic acid, a metal salt and/or an organic derivative thereof and also mixtures or combinations hereof, preferably in combination with at least one synergist.

2. Polyketone moulding compound according to claim 1, **characterised in that**, respectively independently of each other or in combination with each other, the content
(A) of the at least one aliphatic polyketone is 35 - 83.85% by weight, preferably 40 - 76.7% by weight, further preferably of 45 - 71.7% by weight, in particular of 45 - 61.7% by weight,
(B) of the at least one filling- or reinforcing material is 10 - 50% by weight, preferably 15 - 45% by weight, further preferably 20 - 40% by weight, in particular 30 - 40% by weight,
(C) of the at least one halogen-free flame retardant is 7 - 12% by weight, preferably 8 -11% by weight,
(D) of the at least one organic phosphite and/or phosphonite is 0.05 to 1.5% by weight, preferably of 0.1-1.0% by weight, and/or
(E) of the at least one additive is 0.1 - 5% by weight, preferably 0.2 to 3% by weight.

3. Polyketone moulding compound according to one of the preceding claims, **characterised in that** the at least one polyketone (A) is a polymer of carbon monoxide and at least one olefinically unsaturated compound, preferably selected from the group consisting of ethene and at least one further olefinically unsaturated compound with at least 3 to preferably 20 carbon atoms, such as e.g. propene, 1-butene, isobutene, 1-hexene, 1-octene, 1-dodecene, styrene, p-methylstyrene, p-ethylstyrene, m-isopropylstyrene and also mixtures or combinations hereof; particularly preferably a polymer of carbon monoxide and ethene or a terpolymer of carbon monoxide, ethene and propene or 1-butene.

4. Polyketone moulding compound according to one of the preceding claims, **characterised in that** the at least one polyketone (A) is a terpolymer of the subsequent general formula 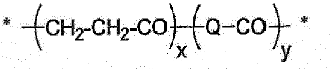 wherein Q is a divalent group, derived from olefinically unsaturated compounds with at least 3 carbon atoms, and the molar ratio y : x is less than or equal to 0.5, preferably less than 0.2, in particular less than or equal to 0.1, in particular of 0.01 to 0.1.

5. Polyketone moulding compound according to one of the preceding claims, **characterised in that** the at least one aliphatic polyketone
a) is a partially crystalline polyketone, preferably with a melting temperature, measured by means of DSC according to ISO 11357-3 at a heating rate of 20 K/min, in the range of 180°C to 280 °C, preferably of 200°C to 240°C, particularly preferably of 210°C to 235°C,
b) has a melt viscosity (MVR, melt volume-flow rate), determined according to ISO 1133 at 240°C with an overlayer of 2.16 kg, in the range of 5 - 200 cm³/10 min, in particular in the range 10 - 100 cm³/10 min, very particularly preferably in the range of 20 - 80 cm³/10 min,
c) has a relative viscosity, measured on solutions of 0.5 g polyketone, dissolved in 100 ml m-cresol at a temperature of 20°C with a capillary viscometer, of 1.5 to 2.5, preferably of 1.6 to 2.2 and/or
d) has a number-average molar mass, determined by means of GPC in hexafluoroisopropanol relative to PMMA standards, in the range of 20,000 to 100,000 g/mol, in particular of 30,000 to 60,000 g/mol.

6. Polyketone moulding compound according to one of the preceding claims, **characterised in that** the filling- or reinforcing materials are selected from the group consisting of fibrous or particulate filling materials or mixtures thereof, which preferably are equipped with a size and/or an adhesive.

7. Polyketone moulding compound according to the preceding claim, **characterised in that** the fibrous filling materials
a) are selected from the group consisting of glass fibres, carbon fibres, metal fibres, aramide fibres, basalt fibres and whiskers and also mixtures or combinations hereof,
b) are present in the form of endless strands and/or in cut form, in particular in the form of short glass fibres (cut glass) and/or
c) have a circular cross-section or a non-circular cross-section, also mixtures of such systems being able to be used.

8. Polyketone moulding compound according to claim 6, **characterised in that** the particulate filling materials are selected from the group consisting of mineral particulate filling materials, preferably talc, mica, silicate, quartz, titanium dioxide, wollastonite, kaolin, amorphous silicic acids, magnesium carbonate, magnesium hydroxide, chalk, lime, feldspar, solid- or hollow glass balls or ground glass, glass flakes, permanently magnetic or magnetisable metal compounds and/or alloys, pigments, in particular barium sulphate, titanium dioxide, zinc oxide, zinc sulphide, iron oxide, copper chromite, or mixtures thereof.

9. Polyketone moulding compound according to one of the preceding claims, **characterised in that** the at least one halogen-free flame retardant comprises
(C1) 60 - 100% by weight, preferably 70 - 98% by weight, in particular 80 - 96% by weight, of at least one phosphinic acid, at least one diphosphinic acid, a metal salt and/or an organic derivative thereof and also
(C2) 0 - 40% by weight, preferably 2 - 30% by weight, in particular 4 - 20% by weight, of at least one synergist,
or consists hereof.

10. Polyketone moulding compound according to the preceding claim, **characterised in that**
(C1) the at least one phosphinic acid and also the metal salts derived herefrom have the subsequently depicted general formula I or the at least one diphosphinic acid and also the metal salts derived herefrom have the subsequently depicted general formula II 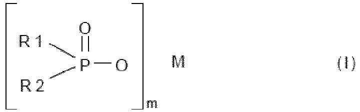 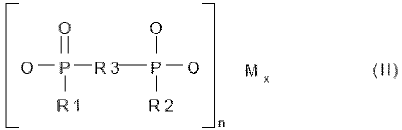 wherein
R1, R2 are the same or different and preferably are C1-C8 alkyl, linear or branched, saturated, unsaturated or partially unsaturated and/or aryl;
R3 are C1-C10 alkylene, linear or branched, saturated, unsaturated or partially unsaturated, C6-C10 arylene, alkylarylene or arylalkylene;
M is a hydrogen ion (proton) or a metal ion from the 2^{nd} or 3^{rd} main or subsidiary group of the periodic table, preferably aluminium, barium, calcium, magnesium and/or zinc; and m = 2 or 3; n = 1 or 3; x = 1 or 2
and/or
(C2) the at least one synergist is selected from the group consisting of
nitrogen and/or phosphorus-containing synergists, preferably melamine or condensation products of melamine, selected particularly preferably from the group consisting of melem, melam, melon, conversion products of melamine with polyphosphoric acid, conversion products of condensation products of melamine with polyphosphoric acid or mixtures thereof,
oxygen-, nitrogen- or sulphur-containing metal compounds, preferably metals being selected from aluminium, calcium, magnesium, barium, sodium, potassium and zinc, further preferably the metal compounds being selected from the group consisting of oxides, hydroxides, carbonates, silicates, borates, phosphates, stannates, alkoxides, carboxylates and also combinations or mixtures of these compounds, such as e.g. oxide-hydroxides or oxide-hydroxide-carbonates, in particular magnesium oxide, calcium oxide, aluminium oxide, zinc oxide, barium carbonate, magnesium hydroxide, aluminium hydroxide, boehmite, pseudoboehmite, dihydrotalcite, hydrocalumite, calcium hydroxide, calcium hydroxylapatite, tin oxide hydrate, zinc hydroxide, zinc borate, zinc sulphide, zinc phosphate, sodium carbonate, calcium carbonate, calcium phosphate, magnesium carbonate, basic zinc silicate, zinc stannate, calcium stearate, zinc stearate, magnesium stearate, barium stearate, potassium palmitate, magnesium behenate and also mixtures and/or combinations of at least two of the previously mentioned compounds.

11. Polyketone moulding compound according to one of the preceding claims, **characterised in that** the at least one organic phosphite and phosphonate is selected from the group consisting of triphenylphosphite, diphenylalkylphosphite, phenyldialkylphosphite, tris(nonylphenyl)phosphite, trilaurylphosphite, trioctadecylphosphite, distearylpentaerythritoldiphosphite, tris(2,4-di-tert-butylphenyl)phosphite, diisodecylpentaerythritoldiphosphite, bis(2,4-di-tert-butylphenyl)pentaerythritoldiphosphite, bis(2,6-di-tert-butyl-4-methylphenyl)pentaerythritoldiphosphite, diisodecyloxypentaerythritoldiphosphite, bis(2,4-di-tert-butyl-6-methylphenyl)pentaerythritoldiphosphite, bis(2,4,6-tris-(tert-butylphenyl))pentaerythritoldiphosphite, tristearylsorbitoltriphosphite, tetrakis(2,4-di-tert-butylphenyl)-4,4'-biphenylene diphosphonite, 6-isooctyloxy-2,4,8,10-tetra-tert-butyl-12H-dibenzo-[d,g]-1,3,2-dioxaphosphocine, 6-fluoro-2,4,8,10-tetra-tert-butyl-12-methyldibenzo[d,g]-1,3,2-dioxaphosphocine, bis(2,4-di-tert-butyl-6-methylphenyl)methylphosphite and bis(2,4-di-tert-butyl-6-methylphenyl)ethylphosphite. In particular, tris[2-tert-butyl-4-thio(2'-methyl-4'-hydroxy-5'-tert-butyl)phenyl-5-methyl]phenylphosphite, tris(2,4-di-tert-butylphenyl)phosphite and also mixtures and combinations hereof are preferred.

12. Polyketone moulding compound according to one of the preceding claims, **characterised in that** the at least one additive is selected from the group consisting of stabilisers, in particular heat-, UV and/or light stabilisers, antioxidants, processing aids, polymers different from aliphatic polyketones, in particular polyolefins, acid- or anhydride-modified polyolefins, polyesters, polyamides, in particular aliphatic polyamides, impact modifiers, adhesives, crystallisation accelerators or retarders, flow aids, lubricants, mould-release agents, plasticisers, radical interceptors, antistatic agents, pigments, colouring- and marking substances, nanoparticles in laminar form, layer silicates, conductivity additives, such as carbon black, graphite powder or carbon nanofibrils, residues from polymerisation processes, such as catalysts, salts and derivatives thereof, oxygen-, nitrogen- or sulphur-containing metal compounds and also regulators, such as e.g. monoacids or monoamines and also mixtures or combinations hereof.

13. Polyketone moulding compound according to one of the preceding claims, **characterised by** a classification V0 with 0.35 to 3.0 mm, in particular with 0.75 and 1.5 mm, thick test pieces, according to UL94.

14. Moulded article, produced from a polyketone moulding compound according to one of the preceding claims, in particular in the form of housings, functional parts for pumps, transmissions, valves, water meters, throttle valves, cylinders, pistons, headlight housings, reflectors, bend-light adjustment, toothed wheels, engine and transmission bearings, plug-in connections, connectors, profiles, foils or layers of multilayer foils, fibres, electronic components, in particular components for portable electronic devices, housings for electronic components, connectors, mobile telephone housings, components for LED housings, housings or housing parts for personal computers, in particular notebook housings, tools, composite materials, fluid-conducting pipes and containers, in particular in the automobile sphere, smooth and corrugated mono- or multilayer pipes, pipe sections, connection pieces, fittings for connecting hoses, corrugated pipes and media-conducting pipes, components of multilayer pipes (inner-, outer- or intermediate layer), individual layers in multilayer containers, hydraulic pipes, brake pipes, clutch pipes, coolant pipes or brake fluid containers.

15. Method for the production of a moulded article according to the preceding claim, by means of injection moulding, extrusion or blow-moulding.

## Revendications

1. Mélange à mouler de polycétone ignifugé contenant, ou en étant constitué :
(A) 30 à 94 % en poids d'au moins une polycétone aliphatique partiellement cristalline ayant une température de fusion (Tₘ) comprise dans la plage de 180°C à 280°C, mesurée par DSC selon ISO 11357-3 pour une vitesse de montée en température de 20 K/min ;
(B) 0 à 50 % en poids d'au moins une matière de remplissage et de renforcement ;
(C) 6 à 15 % en poids d'au moins un agent d'ignifugation non halogéné ;
(D) 0 à 2,0 % en poids d'au moins un phosphite et/ou d'un phosphonite organique ;
(E) 0 à 10 % en poids d'au moins un additif ;
les pourcentages en poids des composants (A) à (E) s'additionnant à 100 %, de préférence le mélange à mouler étant exclusivement constitué des composants (A) à (E) ;
**caractérisé en ce que** l'au moins un agent d'ignifugation non halogéné est choisi dans le groupe consistant en au moins un acide phosphinique, au moins un acide diphosphinique, au moins un sel métallique et/ou un dérivé organique de ceux-ci, ainsi que les mélanges ou combinaisons de ceux-ci, de préférence en combinaison avec au moins un synergiste.

2. Mélange à mouler de polycétone selon la revendication 1, **caractérisé en ce que**, toutes indépendamment les unes des autres ou en combinaison les unes avec les autres, la teneur
(A) en l'au moins une polycétone aliphatique est de 35 à 83,85 % en poids, de préférence de 40 à 76,7 % en poids, d'une manière plus préférée de 45 à 71,7 % en poids, en particulier de 45 à 61,7 % en poids,
(B) en l'au moins une matière de remplissage ou de renforcement est de 10 à 50 % en poids, de préférence de 15 à 45 % en poids, d'une manière plus préférée de 20 à 40 % en poids, en particulier de 30 à 40 % en poids,
(C) en l'au moins un agent d'ignifugation non halogéné est de 7 à 12 % en poids, de préférence de 8 à 11 % en poids,
(D) en l'au moins un phosphite et/ou phosphonite organique est de 0,05 à 1,5 % en poids, de préférence de 0,1 à 1,0 % en poids, et/ou
(E) en l'au moins un additif est de 0,1 à 5 % en poids, de préférence de 0,2 à 3 % en poids.

3. Mélange à mouler de polycétone selon l'une des revendications précédentes, **caractérisé en ce que** l'au moins une polycétone (A) est un polymère de monoxyde de carbone et d'au moins un composé à insaturation éthylénique choisi de préférence dans le groupe consistant en l'éthène et au moins un autre composé à insaturation éthylénique ayant au moins 3 et jusqu'à de préférence 20 atomes de carbone, tel que p.ex. le propène, le 1-butène, l'isobutène, le 1-hexène, le 1-octène, le 1-dodécène, le styrène, le p-méthylstyrène, le p-éthylstyrène, le m-isopropylstyrène, ainsi que les mélanges ou combinaisons de ceux-ci ; d'une manière particulièrement préférée un polymère de monoxyde de carbone et d'éthène ou un terpolymère de monoxyde de carbone, d'éthène et de propène ou de 1-butène.

4. Mélange à mouler de polycétone selon l'une des revendications précédentes, **caractérisé en ce que** l'au moins polycétone (A) est un terpolymère ayant la formule générale suivante 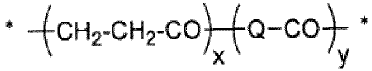 dans laquelle Q est un groupe divalent, qui dérive de composés à insaturation oléfinique ayant au moins 3 atomes de carbone, et le rapport en moles y:x est inférieur ou égal à 0,5, de préférence inférieur à 0,2, en particulier inférieur ou égal à 0,1, en particulier de 0,01 à 0,1.

5. Mélange à mouler de polycétone selon l'une des revendications précédentes, **caractérisé en ce que** la polycétone aliphatique
a) est une polycétone partiellement cristalline, ayant de préférence une température de fusion, mesurée par DSC selon ISO 11357-3 pour une vitesse de montée en température de 20 K/min, comprise dans la plage de 180°C à 280°C, de préférence de 200 à 240°C, d'une manière particulièrement préférée de 210 à 235°C,
b) présente une viscosité à l'état fondu (MVR, indice de fluidité en volume), déterminée selon ISO 1133 à 240°C et sous une charge de 2,16 kg, comprise dans la plage de 5 à 200 cm³/10 min, en particulier dans la plage de 10 à 100 cm³/10 min, d'une manière tout particulièrement préférée dans la plage de 20 à 80 cm³/10 min,
c) présente une viscosité relative, mesurée sur des solutions de 0,5 g de polycétone dissous dans 100 ml de m-crésol à une température de 20°C à l'aide d'un viscosimètre capillaire, de 1,5 à 2,5, de préférence de 1,6 à 2,2, et/ou
d) présente une masse moléculaire moyenne en nombre, déterminée par CPG dans de l'hexafluoroisopropanol, par rapport à un étalon de PMMA, comprise dans la plage de 20 000 à 100 000 g/mol, en particulier de 30 000 à 60 000 g/mol.

6. Mélange à mouler de polycétone selon l'une des revendications précédentes, **caractérisé en ce que** la matière de remplissage ou de renforcement est choisie dans le groupe consistant en les matières de remplissage fibreuses ou particulaires ou les mélanges de celles-ci, qui de préférence sont apprêtés d'un ensimage ou d'un promoteur d'adhérence.

7. Mélange à mouler de polycétone selon la revendication précédente, **caractérisé en ce que** les matières de remplissage fibreuses
a) sont choisies dans le groupe consistant en les fibres de verre, les fibres de carbone, les fibres métalliques, les fibres aramides, les fibres de basalte et les trichites, ainsi que les mélanges ou combinaisons de celles-ci,
b) se présentent sous forme de filaments continus et/ou sous forme coupée, en particulier sous forme de fibres de verre courtes (verre taillé), et/ou
c) présentent une section transversale circulaire ou une section transversale non circulaire, des mélanges de ces systèmes pouvant eux-aussi être utilisés.

8. Mélange à mouler de polycétone selon la revendication 6, **caractérisé en ce que** les matières de charge particulaires sont choisies dans le groupe consistant en les matières de charge particulaires minérales, de préférence le talc, le mica, un silicate, le quartz, le dioxyde de titane, la wollastonite, le kaolin, les silices amorphes, le carbonate de magnésium, l'hydroxyde de magnésium, la craie, la chaux, le feldspath, les billes de verre pleines ou creuses ou le verre pulvérisé, les flocons de verre, les composés et/ou alliages métalliques à aimantation permanente ou aimantables, les pigments, en particulier le sulfate de baryum, le dioxyde de titane, l'oxyde de zinc, le sulfure de zinc, l'oxyde de fer, le chromite de cuivre ou les mélanges de ceux-ci.

9. Mélange à mouler de polycétone selon l'une des revendications précédentes, **caractérisé en ce que** l'au moins un agent d'ignifugation non halogéné comprend, ou en est constitué
(C1) 60 à 100 % en poids, de préférence 70 à 98 % en poids, en particulier 80 à 96 % en poids d'au moins un acide phosphinique, d'au moins un acide diphosphinique, d'un sel métallique et/ou d'un dérivé organique de ceux-ci, ainsi que
(C2) 0 à 40 % en poids, de préférence 2 à 30 % en poids, en particulier 4 à 20 % en poids d'au moins un synergiste.

10. Mélange à mouler de polycétone selon la revendication précédente, **caractérisé en ce que**
(C1) l'au moins un acide phosphinique, ainsi que les sels métalliques qui en dérivent, qui présentent la formule générale I présentée ci-après, ou l'au moins un acide diphosphinique, ainsi que les sels métalliques qui en dérivent, présentent la formule générale II présentée ci-après 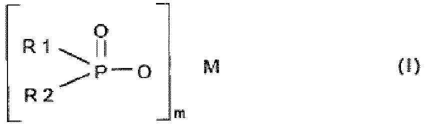 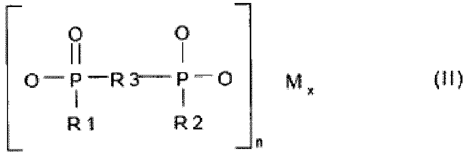 dans lesquelles
R1 et R2 sont identiques ou différents et représentent chacun de préférence un groupe alkyle en C1-C8, à chaîne droite ou ramifiée, saturé, insaturé ou partiellement insaturé et/ou un groupe aryle ;
R3 représente un groupe alkylène en C1-C10, à chaîne droite ou ramifiée, saturé, insaturé ou partiellement insaturé, un groupe arylène en C6-C10, alkylarylène ou arylalkylène ;
M représente un ion hydrogène (proton) ou un ion métallique du 2ème ou du 3ème groupe principal ou secondaire du Tableau Périodique, de préférence l'aluminium, le baryum, le calcium, le magnésium et/ou le zinc ; et m = 2 ou 3 ; n = 1 ou 3 ; x = 1 ou 2,
et/ou
(C2) l'au moins un synergiste est choisi dans le groupe consistant en
les synergistes contenant de l'azote et/ou du phosphore, de préférence la mélamine ou les produits de condensation de la mélamine, d'une manière particulièrement préférée choisis dans le groupe consistant en le mélem, le mélam, le mélon, les produits de réaction de la mélamine avec l'acide polyphosphorique, les produits de la réaction de produits de condensation de la mélamine avec l'acide polyphosphorique ou les mélanges de ceux-ci,
les composés métalliques contenant de l'oxygène, de l'azote ou du soufre, les métaux préférés étant l'aluminium, le calcium, le magnésium, le baryum, le sodium, le potassium et le zinc, d'une manière plus préférée les composés métalliques étant choisis dans le groupe consistant en les oxydes, les hydroxydes, les carbonates, les silicates, les borates, les phosphates, les stannates, les alcoxydes, les carboxylates, ainsi que les combinaisons ou mélanges de ces composés, tels que p.ex. les oxyde-hydroxydes ou les oxyde-hydroxyde-carbonates, en particulier l'oxyde de magnésium, l'oxyde de calcium, l'oxyde d'aluminium, l'oxyde de zinc, le carbonate de baryum, l'hydroxyde de magnésium, l'hydroxyde d'aluminium, la boehmite, la pseudoboehmite, la dihydrotalcite, l'hydrocalumite, l'hydroxyde de calcium, l'hydroxylapatite de calcium, l'oxyde d'étain hydraté, l'hydroxyde de zinc, le borate de zinc, le sulfure de zinc, le phosphate de zinc, le carbonate de sodium, le carbonate de calcium, le phosphate de calcium, le carbonate de magnésium, le silicate basique de zinc, le stannate de zinc, le stéarate de calcium, le stéarate de zinc, le stéarate de magnésium, le stéarate de baryum, le palmitate de potassium, le béhénate de magnésium, ainsi que les mélanges et/ou les combinaisons d'au moins deux des composés mentionnés ci-dessus.

11. Mélange à mouler de polycétone selon l'une des revendications précédentes, **caractérisé en ce que** l'au moins un phosphite ou phosphonite organique est choisi dans le groupe consistant en le phosphite de triphényle, les alkylphosphites de diphényle, les dialkylphosphites de phényle, le phosphite de tris(nonylphényle), le phosphite de trilauryle, le phosphite de trioctadécyle, le diphosphite de distéarylpentaérythritol, le phosphite de tris(2,4-di-tert-butylphényle), le diphosphite de diisodécylpentaérythritol, le diphosphite de bis(2,4-di-tert-butylphényl)pentaérythritol, le diphosphite de bis(2,6-di-tert-butyl-4-méthyl-phényl)pentaérythritol, le diphosphite de diisodécyloxypentaérythritol, le diphosphite de bis(2,4-di-tert-butyl-6-méthylphényl)pentaérythritol,
le diphosphite de bis(2,4,6-tris(tert-butylphényl))pentaérythritol, le triphosphite de tristéarylsorbitol, le diphosphonite de tétrakis(2,4-di-tert-butylphényl)-4,4'-biphénylène, la 6-isooctyloxy-2,4,8,10-tétra-tert-butyl-12H-dibenz[d,g]-1,3-dioxaphosphocine, la 6-fluoro-2,4,8,10-tétra-tert-butyl-12-méthyl-dibenz[d,g]-1,3,2-dioxaphosphocine, le phosphite de bis(2,4-di-tert-butyl-6-méthylphényl)méthyle et le phosphite de bis(2,4-di-tert-butyl-6-méthylphényl)éthyle. Sont particulièrement préférés le phosphite de tris[2-tert-butyl-4-thio(2'-méthyl-4'-hydroxy-5'-tert-butyl)-phényl-5-méthyl]-phényle, le phosphite de tris(2,4-di-tert-butylphényle) ainsi que les mélanges et combinaisons de ceux-ci.

12. Mélange à mouler de polycétone selon l'une des revendications précédentes, **caractérisé en ce que** l'au moins un additif est choisi dans le groupe consistant en les stabilisants, en particulier les thermostabilisants, les stabilisants UV et/ou les photostabilisants, les antioxydants, les auxiliaires de mise en oeuvre, des polymères différents des polycétones aliphatiques, en particulier les polyoléfines, les polyoléfines modifiées par un acide ou un anhydride, les polyesters, les polyamides, en particulier les polyamides aliphatiques, les modifiants choc, les promoteurs d'adhérence, les accélérateurs ou retardateurs de cristallisation, les adjuvants rhéologiques, les lubrifiants, les agents de démoulage, les plastifiants, les fixateurs de radicaux, les antistatiques, les pigments, les colorants et agents de marquage, les nanoparticules sous forme lamellaire, les phyllosilicates, les additifs de conductivité tels que le noir de carbone, la poudre de graphite ou les nanofibrilles de carbone, les résidus de procédés de polymérisation tels que les catalyseurs, les sels et les dérivés de ceux-ci, les composés métalliques contenant de l'oxygène, de l'azote ou du soufre, ainsi que les régulateurs tels que p.ex. les monoacides ou les monoamines, ainsi que les mélanges ou combinaisons de ceux-ci.

13. Mélange à mouler de polycétone selon l'une des revendications précédentes, **caractérisé par** une classification V0 pour des éprouvettes selon UL-94, ayant une épaisseur de 0,35 à 3,0 mm, en particulier de 0,75 mm et de 1,5 mm.

14. Objet moulé fabriqué à partir d'un mélange à mouler de polycétone selon l'une des revendications précédentes, se présentant en particulier sous la forme de boîtiers, de pièces fonctionnelles pour des pompes, des engrenages, des soupapes, des compteurs d'eau, des clapets d'étranglement, des cylindres, des pistons, des boîtiers de phare, des réflecteurs, des phares adaptatifs, des roues dentées, des supports de moteur et d'engrenages, des raccords à fiches, des connecteurs, des profilés, des feuilles ou des couches de feuilles multicouches, des fibres, des composants électroniques, en particulier des composants pour des appareils électroniques portatifs, des boîtiers pour composants électroniques, des connecteurs, des boîtiers de téléphone mobile, des composants pour boîtiers LED, des boîtiers ou parties de boîtiers pour ordinateurs personnels, en particulier des boîtiers pour ordinateurs portables, des outils, des matériaux composites, des canalisations transportant des fluides et des récipients, en particulier dans le domaine automobile, les tubes monocouches ou multicouches lisses ou ondulés, les tronçons de tube, les tubulures, les raccords pour assembler des tuyaux souples, des tubes ondulés et des canalisations de transport de fluides, des constituants de canalisations multicouches (couche intérieure, couche extérieure ou couche intermédiaire), des couches individuelles dans le cas des récipients multicouches, des tuyaux hydrauliques, des conduites de frein, des conduites d'embrayage, des canalisations de fluides de refroidissement ou des récipients pour liquides de frein.

15. Procédé de fabrication d'un objet moulé selon la revendication précédente par moulage par injection, par extrusion ou par soufflage.
